# EUROPÄISCHE PATENTSCHRIFT

(11) **EP 1 291 606 B1**
(45) Veröffentlichungstag und Bekanntmachung des Hinweises auf die Patenterteilung: **12.10.2005**
(21) Anmeldenummer: 02017160.9
(22) Anmeldetag: 31.07.2002
(51) Int. Cl.: F41H 7/02

(54) **Offenes Missionsmodul für gepanzertes Transportfahrzeug**
Open mission module for an armoured transport vehicle
Module de mission ouvert pour un véhicule de transport blindé

(30) Priorität: 10.09.2001 DE 10144371
(43) Veröffentlichungstag der Anmeldung: 12.03.2003
(73) Patentinhaber: Rheinmetall Landsysteme GmbH, 24159 Kiel (DE)
(72) Erfinder: Hass, Frank, 24235 Wendtorf (DE)
(74) Vertreter: Dietrich, Barbara

(56) Entgegenhaltungen:
- EP-A- 0 723 905
- DE-A- 4 219 688
- US-A- 5 435 627
- US-A- 5 447 361

## Beschreibung

Die Erfindung bezieht sich auf ein gepanzertes Fahrzeug, das sich aus den üblichen Teilen wie Antriebsmotor, Getrieben, Radsätzen oder Kettenlaufwerk, einem Besatzungsraum und einem Gehäuse, das alle Ein- und Anbauten aufnimmt, zusammensetzt. Bei einem Schützenkampffahrzeug werden zum Beispiel mit dem Fahrzeug mehrere Soldaten transportiert, die schnell über eine Heckklappe aussteigen oder aufsitzen können. Bei einem anderen Fahrzeugtyp, dem gepanzerten Transport-Kraftfahrzeug, abgekürzt GTK, wird das Fahrzeug in Module eingeteilt und ein sogenanntes Missionsmodul (2) austauschbar auf dem Chassis oder Fahrmodul (1) untergebracht. Verschiedene Bewaffnungen und Ausrüstungen können dann als Modul austauschbar auf dem Fahrzeug wechselweise mitgeführt werden.

Nach dem Stand der Technik sind verschiedene Vorschläge zum Aufbau von modularen Fahrzeugen und zu gepanzerten Transportfahrzeugen und modularen Fahrzeugfamilien gemacht worden.

In der DE 4219688 wird ein luftverlastbares Panzerfahrzeug aus einem Fahrgestell und darauf angeordneten mehreren Gehäuseteilen aufgebaut, wobei ein Gehäuseteil aus einem fahrgestellfesten Unterteil und einem beweglichen Oberteil besteht, welches bei Lufttransport vertikal eingeschoben werden kann zur Verminderung des Fahrzeugvolumens.

In der DE 19502036 wird ein Kettenfahrzeug schnell und kostensparend an unterschiedliche Einsatzforderungen angepasst, in dem der Wannenaufbau modular gestaltet und aus mindestens zwei Modulen besteht.

In der DE 19619865 wird ein umrüstbares militärisches Radfahrzeug mit trennbaren Modulen dargestellt, das aus einem Grundgehäuse zur Aufnahme der Fahrzeugkomponenten besteht und von einem diesel-mechanischen zu einem diesel-elektrischen Antrieb umgebaut werden kann bei Vorteilen für die Bauhöhe und Ausgestaltung des Fahrzeugs.

Aus der DE 19927656A1 ist ein gepanzertes Transportkraftfahrzeug bekannt, welches mit einem unbemannten Schartenturm einschliesslich Lafette und Bordmaschinenwaffe als Bewaffnung ausgerüstet ist, der von der Besatzung aus dem Fahrzeuginneren fernbedient wird.

Aus der Firmenschrift HUMMER M998 Series der Fa. AM General Corporation (USA 7/1991), ist ein militärisches Radfahrzeug mit offener Ladefläche und verschiedenen Aufbauten bekannt.

Ebenso ist ein entsprechendes Radfahrzeug aus der Firmenschrift der Fa. ALM Acmat, F-44600 St.Nazaire/ FR, bekannt.

Da das Grundfahrzeug als ein Familienfahrzeug entwickelt ist,
ist die Darstellung von Spezialfahrzeugen auf Basis des Familienfahrzeugs ein besonderes Innenraum- und Platzproblem bei der Auslegung des spezifischen Fahrzeugs.

Aufgabe der Erfindung ist es, ein Transportfahrzeug, welches aus den Modulen Fahrmodul (1) und Missionssmodul (2) gebildet wird, für weitere Einsatzzwecke insbesondere Transportaufgaben nutzbar zu machen, wobei zu berücksichtigen ist,
dass das Fahrmodul des Familienfahrzeugs unverändert verwendet werden soll,
ein ballistischer Schutz soll für das Fahrzeug oder zumindest für das Fahrmodul vorhanden sein soll,
wegen der Radarsignatur und wegen des Schutzaufbaus soll eine glatte Außenwand mit wenig Durchbrüchen angestrebt werden und
die Nutzung im Friedensbetrieb oder bei friedensstiftenden Massnahmen soll von großer Bedeutung sein neben der primären Auslegung des Fahrzeugs für den Kampfeinsatz.

Diese Aufgabe wird erfindungsgemäß durch die kennzeichnenden Merkmale des Anspruchs 1 gelöst.

Weitere Merkmale ergeben sich aus den Unteransprüchen.

Erfindungsgemäß wird anstelle des Missionsmoduls (2) auf einem bekannten Fahrzeug (1) ein offenes Modul, welches kein Gehäusedach und - seitenwände besitzt, eingebaut. Das offene Missionsmodul kann dabei in verschiedener Weise, zum Beispiel für Pallettentransport, bezüglich Ladefläche und Verzurrmöglichkeiten eingerichtet sein.

Die Vorteile der Erfindung liegen darin, dass das Fahrzeug vielseitig und schnell auf verschiedene Transportaufgaben, insbesondere Personen- oder Materialtransport, mittels des offenen Missionsmoduls und Einsatz von weiteren Ausrüstungen und Einbauten im Missionsmodul eingerichtet werden kann. Das Fahrzeug wird mittels des offenen Missionsmoduls vergleichbar mit einem offenen Lastkraftwagen, der hierbei auch volle Geländegängigkeit besitzt. In der erfindungsgemäßen Ausbildung sind wesentlich größere Volumen und auch Lasten transportierbar als bei dem bekannten Fahrzeug mit geschlossenem und gepanzerten Modul (2) als Aufbau, da jetzt bei dem Missionsmodul (3) als offener Aufbau keine Panzerung zum Ansatz kommt. Das eingesparte Gewicht könnte fallweise auch zur Erhöhung des Panzer- oder Minenschutzes an dem Fahrmodul und für den Fahrer eingesetzt werden, indem Zusatzpanzerungen am Fahrmodul vorgesehen werden.

Ausführungsbeispiele der Erfindung sind in den Zeichnungen schematisch dargestellt und werden im folgenden näher beschrieben. Es zeigen:
- Figur 1:: eine Seitenansicht eines bekannten Basis-Fahrzeuges
- Figur 2:: eine Seitenansicht eines Fahrzeuges mit offenem Missionsmodul
- Figur 3:: eine Seitenansicht eines Fahrzeuges mit offenem Missionsmodul als Lademulde

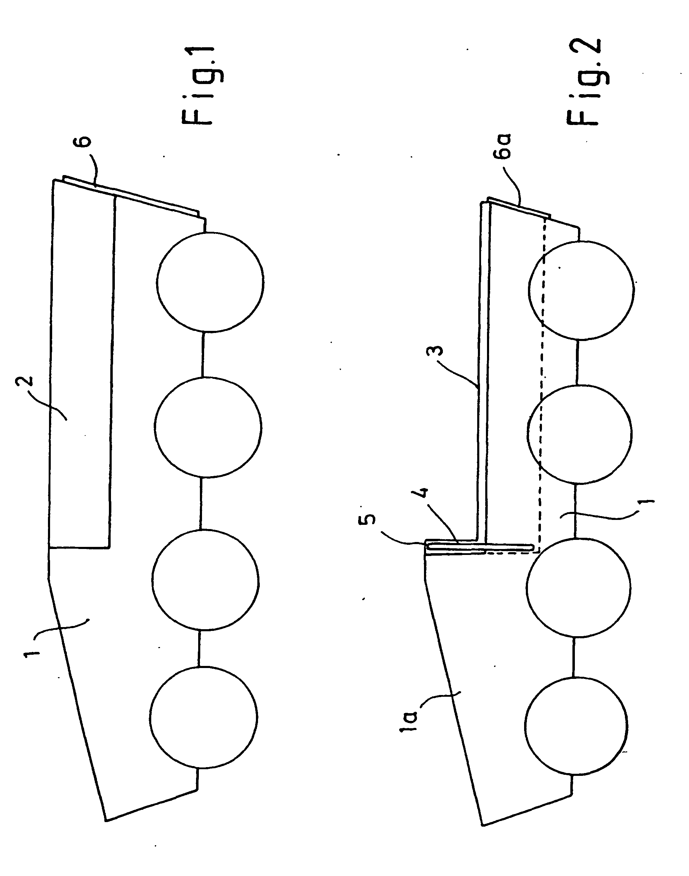

Figur 1 zeigt ein bekanntes Basisfahrzeug oder Fahrmodul 1 mit einem Radfahrwerk und dem oben hinten angebauten Missionsmodul 2. Das Missionsmodul enthält spezifische Ausrüstungen für eine Aufgabe oder Mission und es ist demontierbar, austauschbar befestigt, so daß mittels Missionsmodulen spezifische Fahrzeuge ausgerüstet werden können, die allesamt ein identisches Basisfahrzeug besitzen.

Figur 2 zeigt ein Basisfahrzeug 1, bei dem das Missionsmodul 2 entfernt ist. Anstelle ist ein offenes Missionsmodul 3 eingebaut. Der vordere Teil des Fahrmoduls 1a oder Basisfahrzeugs, welches den Fahrer beherbergt, ist mittels einer verschließbaren Tür 4 gegen das offene Missionsmodul 3 abgedichtet, abgedichtet, wobei die Tür 4 in einer quer zur Fahrtrichtung liegenden Schottwand 5 eingebaut ist.

Anstelle der Hecktür 6 kann auch eine Ladebordwand oder Ladeklappe 6a am offenen Missionsmodul 3 eingebaut werden, die auch fremdkraftunterstützt ausgeführt sein kann. Das offene Missionsmodul 3 ist als Wetterschutz für den offenen Ladungsraum mit Plane und Spiegel ausgerüstet.

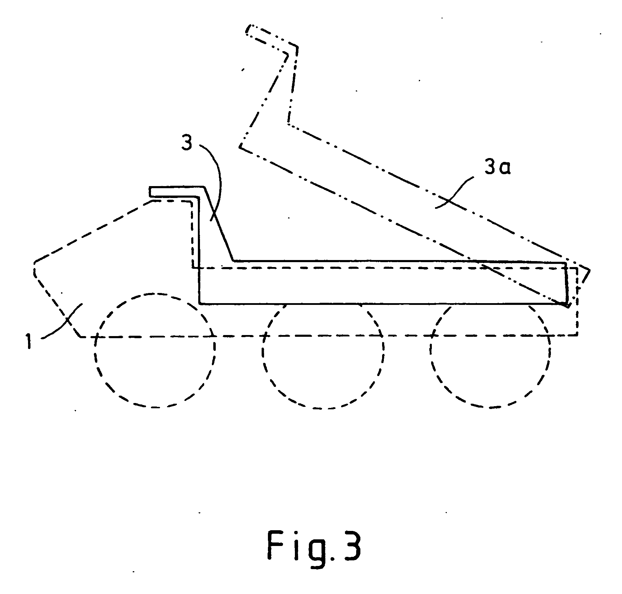

In Figur 3 ist das Fahrmodul 1 mit einem offenen Missionsmodul 3 als Lademulde alternativ dargestellt. In Stellung 3a ist die Lademulde hochgeschwenkt.

Ein zumindest mit einem Fahrer als Besatzung besetztes Fahrmodul 1, 1a bildet mit einem aufgebauten offenen Missionsmodul 3, bei welchem das Gehäusedach und die -seitenwände weggelassen sind, ein Gesamtfahrzeug, mit dem eine Vielzahl von Transportaufgaben durchgeführt werden können im Sinne eines offenen Lastkraftwagens.

Dabei sind lediglich ein Fahrer oder sonstige Besatzung im Fahrmodul 1a geschützt untergebracht, was für eine Vielzahl von Transportaufgaben akzeptabel und ausreichend ist.

In einer Variante des offenen Moduls 3 kann eine hochschwenkbare Lademulde 3a das Gesamtfahrzeug auch zu einem Muldenkipper verwandeln bei entsprechender hydraulischer Hilfskrafteinrichtung für den Kippvorgang.
Mit weiteren Varianten eines offenen Missionsmoduls können Mengenverbrauchs- oder Stückgüter oder Munition bei entsprechender Ausbildung der Ladefläche und Seitenwände transportiert werden.

### Bezugszeichenliste

- 1: Fahrmodul, Basisfahrzeug
- 1a: Fahrmodul
- 2: Missionsmodul
- 3: Offenes Missionsmodul
- 3a: Stellung
- 4: Tür
- 5: Schotterrand
- 6: Hecktür
- 6a: Ladebordwand / Ladeklappe

## Patentansprüche

1. Gepanzertes Transportfahrzeug (1) mit einem Radfahr- oder Kettenlaufwerk und einem Antrieb zur Fortbewegung sowie einem Fahrzeugaufbau zur Aufnahme und Einbau aller Komponenten für den Betrieb des Fahrzeugs einschliesslich einer Fahrzeugbesatzung und einer spezifischen Ausrüstung als Modul (2) für ein Missionsfahrzeug,
*umfassend ein Fahr- und ein Missionsmodul*
**dadurch gekennzeichnet, dass** das
Missionsmodul als offener Aufbau (3) ohne Dach und Seitenwände für verschiedene Transportaufgaben *ausgeführt ist,* und ein mittels einer Tür verschließbarer Durchgang (4) von dem offenen Missionsmodul (3) zu dem Fahrmodul (1a) eingebaut ist.

2. Fahrzeug nach Anspruch 1
**dadurch gekennzeichnet,**
**dass** eine quer zur Fahrtrichtung liegende Schottwand (5), die zwischen Missionsmodul (3) und Fahrmodul (1) an der Schnittstelle zwischen beiden und vorzugsweise im Missionsmodul (3) eingebaut ist, den üblichen Panzerschutz für das Fahrmodul (1) herstellt, wenn das offene Missionsmodul eingebaut ist.

3. Fahrzeug nach einem der Ansprüche 1 und 2,
**dadurch gekennzeichnet,**
**dass** das offene Missionsmodul (3) aus einem Gehäuse ohne Dachblech und ohne Seitenwände besteht für den Transport von Palletten oder anderen Verpackungseinheiten.

4. Fahrzeug nach einem der Ansprüche 1 - 3,
**dadurch gekennzeichnet,**
**dass** das offene Missionsmodul (3) mit einer hochschwenkbaren Lademulde (3a) ausgestattet ist.

5. Fahrzeug nach einem der Ansprüche 2 - 4,
**dadurch gekennzeichnet,**
**dass** ein Durchgang (4) zwischen dem Fahrmodul (1, 1a) und dem offenen Missionsmodul (3) mit einer verschließbaren Tür in der Schottwand (5) eingebaut ist.

6. Fahrzeug nach einem der Ansprüche 1 - 5,
**dadurch gekennzeichnet,**
**dass** eine Ladebordwand oder Ladeklappe (6a) am offenen Missionsmodul (3) eingebaut ist, die auch fremdkraftunterstützt ausgeführt sein kann.

7. Fahrzeug nach einem der Ansprüche 1 - 6,
**dadurch gekennzeichnet,**
**dass** das offene Missionsmodul (3) mit Plane und Spriegel als Wetterschutz für den offenen Laderaum ausgeführt ist.

8. Fahrzeug nach einem der Ansprüche 1 - 7,
**dadurch gekennzeichnet,**
**dass** das Fahrzeug einen grossen offenen Stauraum auf dem Modul (3) besitzt, der wesentlich grösser als der Stauraum in dem bekannten Fahrzeug gebildet aus den Modulen (1 und 2) ist, wobei der Panzerschutz bei den Fahrmodulen (1 und 1a) gleich ist.

## Claims

1. Armoured transport vehicle (1) having a wheel drive or track drive and having a propulsion system for movement as well as a vehicle structure for holding and installation of all the components for operation of the vehicle including a vehicle crew and specific equipment as a module (2) for a mission vehicle,
*comprising* a *driving and* a *mission module*
**characterized in that**
the mission module is *in the form of* an open structure (3) without a roof or side walls for different transport tasks, and an aperture (4), which can be closed by means of a door, is installed from the open mission module (3) to the driving module (1a).

2. Vehicle according to Claim 1,
**characterized**
**in that** a bulkhead wall (5), which is located transversely with respect to the direction of travel and is installed between the mission module (3) and the driving module (1) at the intersection between the two and preferably in the mission module (3), provides the normal armour protection for the driving module (1) when the open mission module is installed.

3. Vehicle according to one of Claims 1 and 2,
**characterized**
**in that** the open mission module (3) comprises a housing without a roof plate and without side walls, for the transportation of pallets or other packaged units.

4. Vehicle according to one of Claims 1 - 3,
**characterized**
**in that** the open mission module (3) is equipped with a cargo bay (3a) which can be pivoted up.

5. Vehicle according to one of Claims 2 - 4,
**characterized**
**in that** an aperture (4) with a door which can be closed is installed in the bulkhead wall (5) between the driving module (1, 1a) and the open mission module (3).

6. Vehicle according to one of Claims 1 - 5,
**characterized**
**in that** a loading ramp wall or loading flap (6a) is installed on the open mission module (3) and can also be designed to support external forces.

7. Vehicle according to one of Claims 1 - 6,
**characterized**
**in that** the open mission module (3) is designed with covers and hoops as protection against the weather for the open cargo bay.

8. Vehicle according to one of Claims 1 - 7,
**characterized**
**in that** the vehicle has a large open stowage space on the module (3), which is considerably larger than the stowage space in known vehicle formed from the modules (1 and 2), with the armour protection being the same for the two driving modules (1 and 1a).

## Revendications

1. Véhicule de transport blindé (1) comprenant un mécanisme de roulement à roues ou à chaînes et un entraînement de déplacement en avant ainsi qu'une carrosserie de véhicule pour recevoir et intégrer tous les composants destinés au fonctionnement du véhicule y compris un équipage du véhicule et un équipement spécifique en tant que module (2) pour un véhicule de mission,
comprenant un module de conduite et un module de mission,
**caractérisé en ce que** le module de mission est réalisé sous forme de carrosserie ouverte (3) sans toit ni parois latérales pour divers objectifs de transport, et un passage (4) du module de mission ouvert (3) au module de conduite (1a), pouvant être obturé par une porte, est incorporé.

2. Véhicule selon la revendication 1,
**caractérisé en ce qu'**
une paroi de séparation (5) située transversalement à la direction d'avance, qui est intégrée entre le module de mission (3) et le module de conduite (1) au niveau de l'interface entre les deux, et de préférence dans le module de mission (3), assure la protection blindée usuelle pour le module de conduite (1) lorsque le module de mission ouvert est incorporé.

3. Véhicule selon l'une quelconque des revendications 1 et 2,
**caractérisé en ce que**
le module de mission ouvert (3) se compose d'une enceinte sans tôle de toit et sans parois latérales pour le transport de palettes ou d'autres unités d'emballage.

4. Véhicule selon l'une quelconque des revendications 1 à 3,
**caractérisé en ce que**
le module de mission ouvert (3) est équipé d'une benne de chargement (3a) pouvant pivoter vers le haut.

5. Véhicule selon l'une quelconque des revendications 2 à 4,
**caractérisé en ce qu'**
un passage (4) entre le module de conduite (1, 1a) et le module de mission ouvert (3) est incorporé dans la paroi de séparation (5) avec une porte obturable.

6. Véhicule selon l'une quelconque des revendications 1 à 5,
**caractérisé en ce qu'**
un plateau élévateur ou un hayon de chargement (6a) est incorporé sur le module de mission ouvert (3), lequel peut être réalisé avec un support par une force auxiliaire.

7. Véhicule selon l'une quelconque des revendications 1 à 6,
**caractérisé en ce que**
le module de mission ouvert (3) est réalisé avec une bâche et des arceaux pour la protection contre les intempéries pour l'espace de chargement ouvert.

8. Véhicule selon l'une quelconque des revendications 1 à 7,
**caractérisé en ce que**
le véhicule possède un grand espace de rangement ouvert sur le module (3), qui est nettement plus grand que l'espace de rangement dans le véhicule connu formé des modules (1 et 2), la protection blindée étant la même pour les modules de conduite (1 et 1a).
